# EUROPEAN PATENT APPLICATION

(11) **EP 3 451 505 A1**
(43) Date of publication of application: **06.03.2019**
(21) Application number: 17789149.6
(22) Date of filing: 27.03.2017
(51) Int. Cl.: H02K 3/18, H02K 15/04

(54) **ROTARY ELECTRIC MACHINE**

(30) Priority: 28.04.2016 JP 2016090040
(71) Applicant: Hitachi Automotive Systems Engineering, Ltd., Hitachinaka-shi, Ibaraki 312-0062 (JP)
(72) Inventor: TAGO Kazutami, Tokyo 100-8280 (JP); KANAZAWA Hiroshi, Hitachinaka-shi Ibaraki 312-0062 (JP); KITAMURA Hideki, Tokyo 100-8280 (JP); NAKAYAMA Kenji, Hitachinaka-shi Ibaraki 312-0062 (JP)
(74) Representative: MERH-IP Matias Erny Reichl Hoffmann Patentanwälte PartG mbB
(86) International application number: PCT/JP2017/012217
(87) International publication number: WO 2017/187860

(57) **Abstract**

An object of the invention is to provide a concentrated winding brushless motor of a permanent magnet type, in which a lead wire and a jumper wire to a tooth far away from the adjacent tooth are disposed at the ends of coils on an axially reverse side in order to make a manufacturing work of coils efficient.

In order to achieve the object, there is provided a brushless motor which is provided with a concentrated winding stator and a permanent magnet type rotor, a stator coil is wound to satisfy that the number of times of winding of coils of a tooth connected to the lead wire is set to a half integer or, in a case where there is a coil which is connected to the coil of the tooth connected to the lead wire, the number of times of winding of the teeth is set to a half integer, the number of times of winding of the coil of the tooth connected to the lead wire or a coil of a tooth far away from the adjacent tooth which are connected by the jumper wire, or the number of times of winding of the coil of the tooth adjacently connected to the coil of the tooth far away from the adjacent tooth which are connected by the jumper wire is set to an integer.

## Description

### Technical Field

The present invention relates to a permanent magnetic concentrated winding brushless motor and an electric auxiliary system for automobiles such as an electric power steering device using the brushless motor.

### Background Art

As a hydraulic pressure is replaced with electrical motorization and the markets of a hybrid automobile and an electric automobile are widened, a rate of mounting the electric power steering (hereinafter, referred to as EPS) device is steeply increased.

In an EPS device, an electric motor assists the operation of a steering wheel. Therefore, a driver can feel torque pulsation of the motor through the steering wheel. Therefore, in an EPS motor, there is a need to set a cogging torque to about 1/1000 of an assist torque of the motor, and to set the torque pulsation to about 1% of the assist torque.

Further, in recent years, an improvement in pleasant driving and noise reduction in the interior of the vehicle are progressing against the background that vehicles mounted with automatic functions for some operations such as idling stopping and braking. As a result, a low vibration and a low noise are required for electric components such as the EPS device from the viewpoint of the noise reduction in the interior of the vehicle. In addition, at the same time, there is required for the equipment including a motor to be made at a low cost.

As a vibration source caused by a motor which may produce vibrations and noises in the interior of the vehicle, there are variation components (cogging torque and torque pulsation) of torque in the motor and an electromagnetic exciting force which is generated between a stator and a rotor of the motor. The former is propagated through an output shaft of the motor, and vibration energy of the motor caused by the latter is propagated to the interior of the vehicle through mechanical components of the EPS device. These vibrations are radiated to the interior of the vehicle as a radiating sound, and become noises. Electric equipment other than the EPS device also generates noises in the interior of the vehicle by the similar mechanism.

The price of the motor includes the cost of materials such as magnets and coils and the cost of manufacturing. Therefore, there is required a motor which has a high ratio of the size and the magnetic weight to the output power at a high power density, and can suppress the cost of materials. In addition, there is required a motor which is easily manufactured with a less manpower and with a small manufacturing device.

Merits and demerits when a motor is used in the EPS device will be simply described below. In a distributed winding, it is known that the cogging torque and the torque pulsation can be made small, the vibration can be made less by increasing the spatial order of the electromagnetic exciting force, the structure is complicate compared to a concentrated winding, the size in an axial direction is large, and the manufacturing cost is increased.

In addition, in the concentrated winding, if a ratio of the number of poles of the motor to the number of slots is set to 10:12 or 14:12, a rotation order is high. Therefore, the cogging torque and the torque pulsation can be reduced. However, it is known that the electromagnetic exciting force is a second spatial order which causes vibration. In addition, in a motor of which the ratio of the number of poles and the number of slots is 8:12, the spatial order of the electromagnetic exciting force is a fourth spatial order, so that the vibration is less. However, it is known that there is required a technology of reducing the cogging torque and the torque pulsation.

With this regard, the characteristics of the concentrated winding motor of which the ratio of the number of poles of the motor and the number of slots is 14:18 will be described below with reference to the documents. For example, JP 62-110468 (hereinafter, PTL 1) and JP 9-172762 (hereinafter, PTL 2) disclose that a winding factor is 0.902, which is higher than that of the motor having a ratio of 8:12, to be high in an output density, and an order of the cogging torque is as small as "126".

In addition, NPL 1 discloses a layout of three-phase coils of the motor having the winding factor of 0.902. When three-phase coils are wound, the motor having the winding factor of 0.902 can be configured. In the winding, one of the three-phase coils may be configured by any one of 6 series, 3 series and 2 parallel, 2 series and 3 parallel, and 6 parallel.

Herein, the coil is wound around teeth of the stator core which is configured by stacking in a rotation axial direction. A lead wire to a power source or a neutral point and a jumper wire to connect a tooth far away from the adjacent tooth when a plurality of teeth are wound in series are disposed at the end in the axial direction of the tooth as the end of the coil.

In PTLs 3 and 4, there is described an example in which the three-phase coils disclosed in NPL 1 are disposed, and the lead wire and the jumper wire are disposed at the end of the coil on the same side in the rotation axial direction.

In PTL 5, there is described an example in which the three-phase coils disclosed in NPL 1 are disposed, the lead wire and the jumper wire are disposed at the end of the coil on the same side in the rotation axial direction, and also described that the electromagnetic exciting force of the second spatial order is small compared to the motor of which the ratio of the number of poles and the number of slots is 10:12.

In the motor having 14 poles and 18 slots, one of the three-phase coils may be configured by any one of 6 series, 3 series and 2 parallel, 2 series and 3 parallel, and 6 parallel. The configurations of 6 series and 3 series and 2 parallel are normally used. In this case, as described in PTLs 3, 4, and 5, in the configuration that the lead wire and the jumper wire are disposed at the end on the same coil side, there are needed a work of connecting 6 to 12 lead wires and a work of connecting 6 to 18 jumper wires to a tooth far away from the adjacent tooth or of storing the jumper wires to the end of the coil. Since the end of the same coil is limited in space, a procedure of the work is complicated and a cost is required for additional members.

In the related art, the reason why the lead wire and the jumper wire are disposed on the same side of the rotation axis is that the number of times of winding of each tooth is set to an integer. When the number of times of winding is set to an integer, the end of the coil where the winding starts becomes the same side as the end of the coil where the winding ends.

On the other hand, when the number of times of winding is set to a half integer, the end of the coil where the winding starts is on the opposite side to the end of the coil where the winding ends. In addition, generally, the number of times of winding of each tooth is the same. However, in a case where the number of times of winding is set to a half integer when two teeth are wound in series, the lead wire and the jumper wire to a tooth far away from the adjacent tooth can be disposed at the end of the coil on the opposite side.

However, in a case where an odd number (3 or more) of teeth are wound in series when the number of times of winding is set to a half integer, the lead wires are disposed at the ends of the coils on both sides. In addition, in a case where three or more teeth are wound in series when the number of times of winding is set to a half integer, some of the jumper wires to a tooth far away from the adjacent tooth are disposed at the ends of the coils on the same side as the lead wire. Therefore, a manufacturing work of the coils becomes complicated.

In addition, in a case where the number of times of winding varies for each tooth, there is needed a study not to lose the balance of a three-phase magnetomotive force and not to cause a torque variation. Therefore, when three or more teeth are wound in series, the same integer number of times of winding is the most reasonable configuration. However, in order to reduce the manufacturing cost, there is required a configuration and a method which can efficiently manufacture the coil without causing a damage on the motor characteristics.

### Citation List

### Patent Literature

PTL 1: JP 62-110468 A
PTL 2: JP 9-172762 A
PTL 3: DE 10 2011 078 157 A1_2013.01.03
PTL 4: DE 10 2011 084 716 A1_2013.04.18
PTL 5: WO 2013-080374 A1_20130612

### Non Patent Literature

NPL 1: International Conferences on Electrical Machines, September 2004, F. Libert, J. Soulard, "Investigation on Pole-Slot Combinations for Permanent-Magnet Machines with Concentrated Windings"

### Summary of Invention

### Technical Problem

The invention has been made in view of the above problems, and an object thereof is to efficiently perform a manufacturing work on a coil in a concentrated winding brushless motor.

### Solution to Problem

In order to solve the above problems, there is provided a brushless motor which includes a concentrated winding stator and a permanent magnet type rotor. In the brushless motor, a stator coil is wound such that the number of times of winding of a coil of a tooth connected to a lead wire is set to a half integer or, in a case where there is a coil adjacently connected to the tooth connected to the lead wire, the number of times of winding is set to a half integer. The number of times of winding of the coil of tooth connected to the lead wire or the coil of the tooth connected to a tooth far away from the adjacent tooth by a jumper wire, or the coil of a tooth adjacently connected to the coil of the tooth far away from the adjacent tooth by the jumper wire is set to an integer.

Other solutions will be appropriately described in embodiments.

### Advantageous Effects of Invention

According to the invention, a lead wire and a jumper wire to a tooth far away from the adjacent tooth can be disposed at the end of the coil on an axially reverse side, so that the manufacturing work can be efficiently performed on the coil. Objects, configurations, and features other than those described above will become clear through the explanation about the following embodiments.

### Brief Description of Drawings

[FIG. 1] FIG. 1 is a front view of a cross section perpendicular to a rotation axis of a stator of a permanent magnet type concentrated winding motor having 14 poles and 18 slots. A phase arrangement of stator coils is included.
[FIG. 2] FIG. 2 is a diagram illustrating a first embodiment of the invention, and for describing a connection between the stator coils, a connection to a lead wire and a jumper wire, and a layout.
[FIG. 3 (A)] FIG. 3 (A) is a diagram illustrating the first embodiment of the invention, and for describing an exemplary procedure of manufacturing the stator while avoiding interference of the jumper wire.
[FIG. 3 (B)] FIG. 3 (B) is a diagram illustrating the first embodiment of the invention, and for describing an exemplary procedure of manufacturing the stator while avoiding interference of the jumper wire.
[FIG. 4 (A)] FIG. 4 (A) is a diagram illustrating the first embodiment of the invention, and for describing a double parallel Y-connection.
[FIG. 4(B)] FIG. 4 (B) is a diagram illustrating the first embodiment of the invention, and for describing a double parallel Δ-connection.
[FIG. 4(C)] FIG. 4(C) is a diagram illustrating the first embodiment of the invention, and for describing a serial Y-connection.
[FIG. 4(D)] FIG. 4 (D) is a diagram illustrating the first embodiment of the invention, and for describing a serial Δ-connection.
[FIG. 5] FIG. 5 is a diagram illustrating a second embodiment of the invention, and for describing a connection between the stator coils, a connection to the lead wire and the jumper wire, and a layout.
[FIG. 6 (A)] FIG. 6 (A) is a diagram illustrating the second embodiment of the invention, and for describing an exemplary procedure of manufacturing the stator while avoiding interference of the jumper wire.
[FIG. 6 (B)] FIG. 6(B) is a diagram illustrating the second embodiment of the invention, and for describing an exemplary procedure of manufacturing the stator while avoiding interference of the jumper wire.
[FIG. 7] FIG. 7 is a diagram illustrating a third embodiment of the invention, and for describing a connection between the stator coils, a connection to the lead wire and the jumper wire, and a layout.
[FIG. 8] FIG. 8 is a diagram illustrating the third embodiment of the invention, and for describing an exemplary procedure of manufacturing the stator while avoiding interference of the jumper wire.
[FIG. 9] FIG. 9 is a diagram illustrating a fourth embodiment of the invention, and for describing a connection between the stator coils, a connection to the lead wire and the jumper wire, and a layout.
[FIG. 10] FIG. 10 is a diagram illustrating the fourth embodiment of the invention, and for describing an exemplary procedure of manufacturing the stator while avoiding interference of the jumper wire.
[FIG. 11] FIG. 11 is a diagram illustrating the fourth embodiment of the invention, and for describing a calculation result of torque.
[FIG. 12] FIG. 12 is a diagram illustrating the fourth embodiment of the invention, and for describing a calculation result of torque ripples.

### Description of Embodiments

Next, a mode for carrying out the invention (referred to as "embodiment") will be described with reference to the appropriate drawings. Further, the same components in the respective drawings will be attached with the same symbol, and the description will be omitted.

Further, a permanent magnetic type brushless motor for an EPS device of the embodiment is applicable even to an electric auxiliary device for other automobiles. Further, the embodiment is also applicable generally to the brushless motors for industries requiring low vibrations.

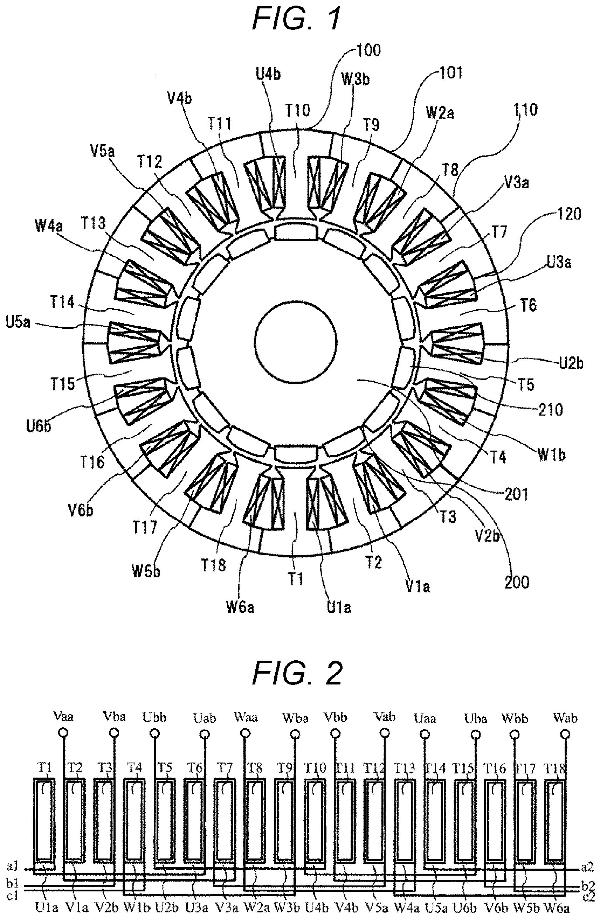

In the following, the description will be given about an example of a motor having 14 poles and 18 slots of a winding factor of 0.902 using the drawings. The phase and the winding direction (or current direction) of wound teeth are as illustrated in FIG. 1. As illustrated in FIG. 1, the teeth forming an 18-slot stator are assigned with symbols to make a distinction. The symbols are attached to the teeth in an order of adjacent teeth in a counterclockwise direction such as T1, T2, T3, T4, T5, T6, T7, T8, T9, T10, T11, T12, T13, T14, T15, T16, T17, and T18. The coils to be wound around the teeth are assigned with symbols to make a distinction such as U1a, V1a, V2b, W1b, U2b, U3a, V3a, W2a, W3b, U4b, V4b, V5a, W4a, U5a, U6b, V6b, W5b, and W6a. The symbols U, V, and W represent U phase, V phase, and W phase. The number represents a place of the teeth where each phase appears along the teeth. "a" and "b" represent a forward/backward order in a winding direction (or current direction). A group of coils at rotationally symmetrical positions at every 60° (U1a, W1b, V3a, U4b, W4a, and V6b) will be called Group A. A group of coils at rotationally symmetrical positions at every 60° (V1a, U2b, W2a, V4b, U5a, and W5b) will be called Group B. A group of coils at rotationally symmetrical positions at every 60° (V2b, U3a, W3b, V5a, U6b, and W6a) will be called Group C.

In any group, the coils are disposed at an equal interval in an order of Ua, Wb, Va, Ub, Wa, and Vb, an order of a torque ripple caused by six coils is 6 × Electrode Pairs (7) = 42, and does not change from the order in the motor having 14 poles and 18 slots. This is because there is kept a balance of a three-phase magnetomotive force. Therefore, even in the case of a motor having different numbers of times of winding in Group A, Group B, and Group C, the torque ripples of the motor become almost the same degree as the torque ripples of a motor of which the total number of times of winding is equal to an average number of times of winding of the above motor if the number of times of winding is equal in each group. In addition, it is considered that the torque of the motor is almost matched with the torque of a motor of which the average number of times of winding is equal to the total number of times of winding of the above motor. In other words, there is no problem even if the groups are different in the number of times of winding.

As described above, giving an example of a motor having 14 poles and 18 slots, 22 poles and 18 slots, or a combination of multiples of the poles and the slots, Group A, Group B, and Group C are each configured without causing degradation in torque variation and exciting force while keeping a balance of the three-phase magnetomotive force even if the numbers of times of winding are different. In addition, even regarding other motors, in a case where the number of series of coils is three or more, and the degradation in torque variation and exciting force caused by the difference in the number of times of winding is less affected, the number of times of winding may be set differently in order to dispose a lead wire and a jumper wire to a tooth far away from the adjacent tooth at the ends of a coil on an axially reverse side.

### (First Embodiment)

The description will be given about a configuration of a permanent magnet type brushless motor having 14 poles and 18 slots according to a first embodiment of the invention using FIGS. 1 to 4(D).

In FIG. 1, U5a, U1a, and U3a are configured as 3-series coils, and similarly V1a, V3a, and V5a and W2a, W4a, and W6a are configured as 3-series coils, so that Type-a 3-series coils are configured. In addition, U2b, U4b, and U6b are configured as 3-series coils, and similarly V4b, V6b, and V2b and W5b, W1b, and W3b are configured as 3-series coils, and these coils are considered as Type-b 3-series coils. In the respective 3-series coils, the numbers of times of winding of the 3-series coils are sequentially set to a half integer Na, an integer N, and a half integer Nb.

In this case, Group A: the number of times of winding of each of U1a, W1b, V3a, U4b, W4a, and V6b is the integer N, Group B: the number of times of winding of each of V1a, U2b, W2a, V4b, U5a, and W5b is the half integer Na, and Group C: the number of times of winding of each of V2b, U3a, W3b, V5a, U6b, and W6a is the half integer Nb. In each group, the number of times of winding is equal.

The description will be given using FIG. 2 about the connection of coils and the layout of a lead wire and a jumper wire in a case where the 3-series coils and the number of times of winding are configured as described above, and teeth T1 to T18 are arranged in this order and wound.

FIG. 2 illustrates the teeth and the coils of FIG. 1 in which the arrangement in a circumferential direction is developed and expanded in a linear shape from the left T1 to the right T18. The upward and downward direction of FIG. 2 represents a direction of a rotation axis. The lead wire is disposed at the end on the upper side of the coil wound around the teeth, and the jumper wire is disposed at the end of the lower side.

In FIG. 2, the lead wires of the coils are distinguished by attaching symbols using characters arranged one by one selected from the phases U, V, and W, the coil types a and b, and the forward/backward order (a, b) of the current direction. For example, the coil V1a connected to a lead wire Vaa has the number of times of winding of the half integer Na, and thus the jumper wire goes to the coil V3a on the opposite side to the lead wire Vaa. The coil V3a has the number of times of winding of the integer N, and thus the jumper wire goes to the coil V5a on the opposite side to the lead wire Vaa. The coil V5a has the number of times of winding of the half integer Nb, and thus a lead wire Vab is disposed on the same side as the lead wire Vaa. In this way, with the 3-series coils and the number of times of winding, the lead wire and the jumper wires to a tooth far away from the adjacent tooth can be disposed on the opposite side. Herein, symbols a1 and a2 of FIG. 2 indicate that the jumper wires are linked to a1 and a2.

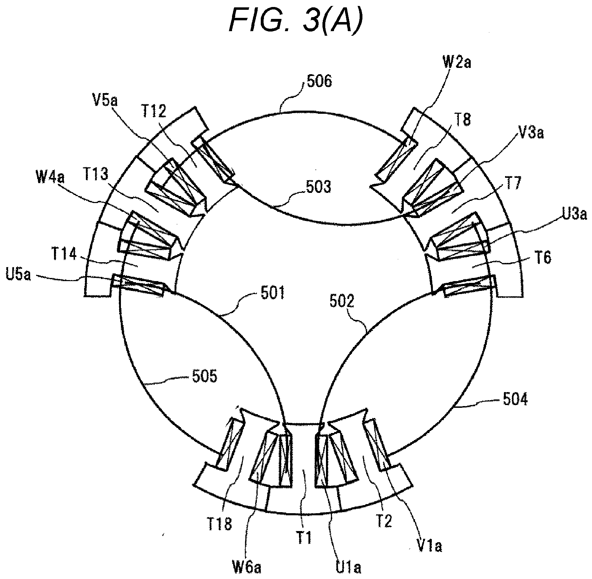

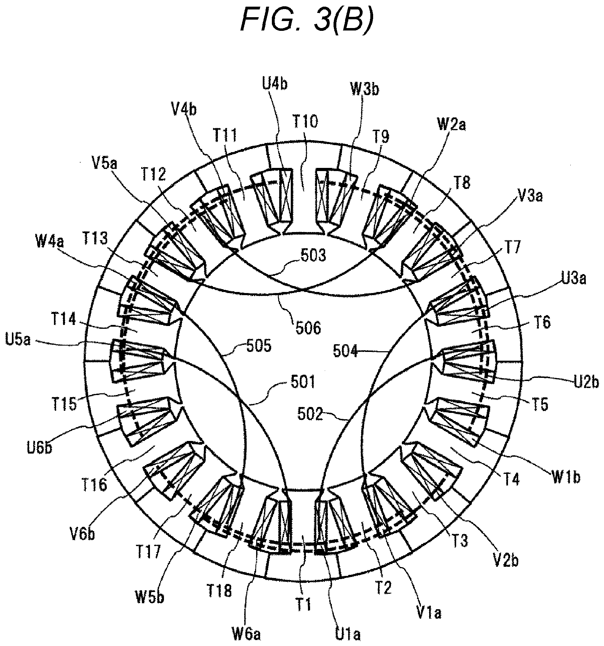

In the following, the description will be given using FIGS. 3(A) and 3(B) about an example of creating the 3-series coils by winding coils around the teeth of split stator cores and of assembling the coils to the stator. FIGS. 3 (A) and 3 (B) are front view of the coil end when viewed from the jumper wire side (upper side) in an example where the lead wire side is placed below and the split cores are inserted and assembled, in which the layout of the inserted split core coils and the jumper wires is illustrated.

In the beginning, the Type-a 3-series coils are assembled in an order of U phase, V phase, and W phase. First, a split core containing the 3-series coils U5a, U1a, and U3a and the teeth T14, T1, and T6 is disposed. Second, a split core containing the 3-series coils V1a, V3a, and V5a and the teeth T2, T7, and T12 is disposed. Third, a split core containing the 3-series coils W2a, W4a, and W6a and the teeth T8, T12, and T18 is disposed.

In this case, as illustrated in FIG. 3(A), jumper wires 501 and 502 of the 3-series coils U5a, U1a, and U3a interfere in the split core of the coil V1a of V phase and the split core of the coil W6a of W phase when these cores are disposed. Therefore, the slit core of the coil V1a of V phase and the split core of the coil W6a of W phase may be disposed by deforming the jumper wires 501 and 502 toward an inner diameter side.

In addition, a jumper wire 503 between the coils V3a and V5a interferes in the split core of the coil W2a of W phase when the core is disposed. Therefore, the split core of the coil W2a of W phase may be disposed by deforming the jumper wire 503 toward the inner diameter side. The other jumper wires 504, 505, and 506 can be disposed at the coil end without being deformed. FIG. 3(A) illustrates the layout at this point of time.

Next, the description will be given using FIG. 3 (B) about an example of a procedure in which all the Type-a jumper wires 501 to 506 are deformed toward the inner diameter side, and the Type-b 3-series coils are assembled in an order of U phase, V phase, and W phase.

Fourth, a split core containing the 3-series coils U2b, U4b, and U6b and the teeth T5, T10, and T15 is disposed. Fifth, a split core containing the 3-series coils V4b, V6b, and V2b and the teeth T11, T16, and T3 is disposed. Sixth, a split core containing the 3-series coils W5b, W1b, and W3b and the teeth T17, T4, and T9 is disposed.

In this case, similarly to the case of FIG. 3(A), the jumper wires of the 3-series coils U2b, U4b, and U6b interfere in the split core of the coil V4b of V phase and the split core of the coil W3b of W phase when these cores are disposed. Therefore, the split core of the coil V4b of V phase and the split core of the coil W3b of W phase may be disposed by deforming the jumper wire toward the inner diameter side.

In addition, the jumper wire between the coils V6b and V2b interferes in the split core of the coil W5b of W phase when the core is disposed. Therefore, the split core of the coil W5b of W phase may be disposed by deforming the jumper wire toward the inner diameter side. As described above, three Type-b jumper wires deformed toward the inner diameter side are disposed at the ends of the coils after disposing all the split cores.

FIG. 3(B) illustrates the layout at this time point, in which the Type-b jumper wire at the end of the coil is depicted with a broken line. Finally, six Type-a jumper wires deformed toward the inner diameter side are disposed at the ends of the coils, and the assembling of the stator coils is completed. In a first example, there are nine jumper wires disposed at the ends of the deformed coils.

With such a layout, on the lead wire side, a neutral point in Y-connection and a power source terminal may be connected, or the power source terminal in Δ-connection may be connected. Since no process is required for the jumper wire, additional members and complicate processing procedures are not necessary. Therefore, it is possible to improve work efficiency, and reduce manufacturing costs.

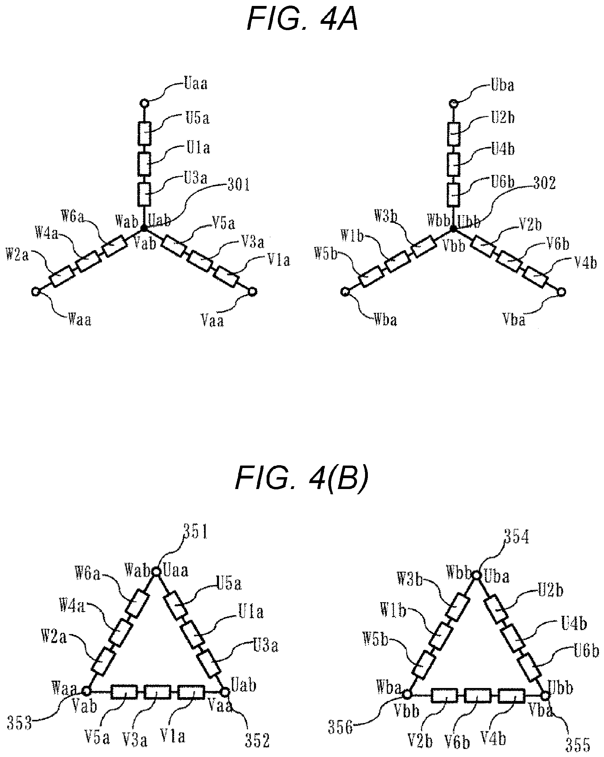

FIG. 4(A) illustrates an exemplary layout of coils in a double parallel Y-connection when the 3-series coils and the number of times of winding are used. The Y-connection is configured only by the Type-a 3-series coils, the Y-connection is configured only by the Type-b 3-series coils, and external terminals of both connections are connected in parallel.

The coil U5a of the Type-a 3-series coils U5a, U1a, and U3a is disposed on the lead wire side, and the coil U3a is disposed on the neutral point side. Similarly, the other 3-series coils are disposed on the lead wire side and the neutral point side, and then the left connection of FIG. 4(A) is obtained.

In FIG. 4(A), the lead wires Uab, Vab, and Wab of FIG. 2 are connected to a neutral point 301, and the lead wires Uaa, Vaa, and Waa of FIG. 2 are the lead wires to the power source. The configuration of the Y-connection using the Type-b 3-series coils is also similar, and the description will be omitted. The lead wires Uaa and Uba are connected to a U-phase power source terminal, the lead wires Vaa and Vba are connected to a V-phase power source terminal, and the lead wires Waa and Wba are connected to a W-phase power source terminal, so that the double parallel Y-connection can be configured.

FIG. 4 (B) illustrates an exemplary layout of coils in the double parallel Δ-connection when the 3-series coils and the number of times of winding are used. The Δ-connection is configured only by the Type-a 3-series coils, the Δ-connection is configured only by the Type-b 3-series coils, and external terminals of both connections are connected in parallel.

As illustrated in FIG. 4 (A), the lead wire Uaa of the Type-a 3-series coils U5a, U1a, and U3a and the lead wire Wab of the W2a, W4a, and W6a are connected to a terminal 351. The lead wire Uab of the U5a, U1a, and U3a and the lead wire Vaa of the V1a, V3a, and V5a are connected to a terminal 352. The lead wire Vab of the V1a, V3a, and V5a and the lead wire Waa of the W2a, W4a, and W6a are connected to a terminal 353. With such a connection, the left connection of FIG. 4(B) is obtained.

The configuration of the Δ-connection using the Type-b 3-series coils is also similar, and the description will be omitted. The terminal 351 and a terminal 354 are connected to the U-phase power source terminal, the terminal 352 and a terminal 355 are connected to the V-phase power source terminal, and the terminal 353 and a terminal 356 are connected to the W-phase power source terminal, so that the double parallel Δ-connection can be configured.

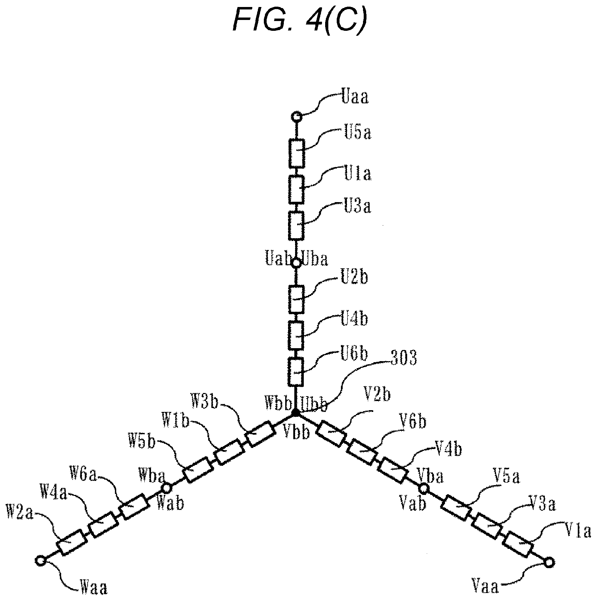

FIG. 4 (C) illustrates an exemplary layout of coils in the series Y-connection when the 3-series coils and the number of times of winding are used. The coil U5a of the Type-a 3-series coils U5a, U1a, and U3a is disposed on the lead wire side, and the lead wires Uab and Uba are connected to make a six-series, and the lead wire Ubb is connected to a neutral point 303.

Similarly, the other 3-series coils are disposed such that the corresponding lead wires are connected on the lead wire side in series, and disposed on the neutral point side, so that the connection layout of FIG. 4(C) is obtained. In FIG. 4(C), the lead wires Ubb, Vbb, and Wbb are connected to the neutral point 301, and the lead wires Uaa, Vaa, and Waa are the lead wires to the power source. The lead wire Uaa is connected to the U-phase power source terminal, the lead wire Vaa is connected to the V-phase power source terminal, and the lead wire Waa is connected to the W-phase power source terminal, so that the series Y-connection can be configured. Further, it is considered that the numbers of times of winding of the coils U3a and U2b are set to integers and the coils U3a and U2b are connected by the jumper wires when 6-series coils are configured. However, the interference caused by the jumper wires is complicated, and thus the lead wires Uab and Uba are used for the connection in this example.

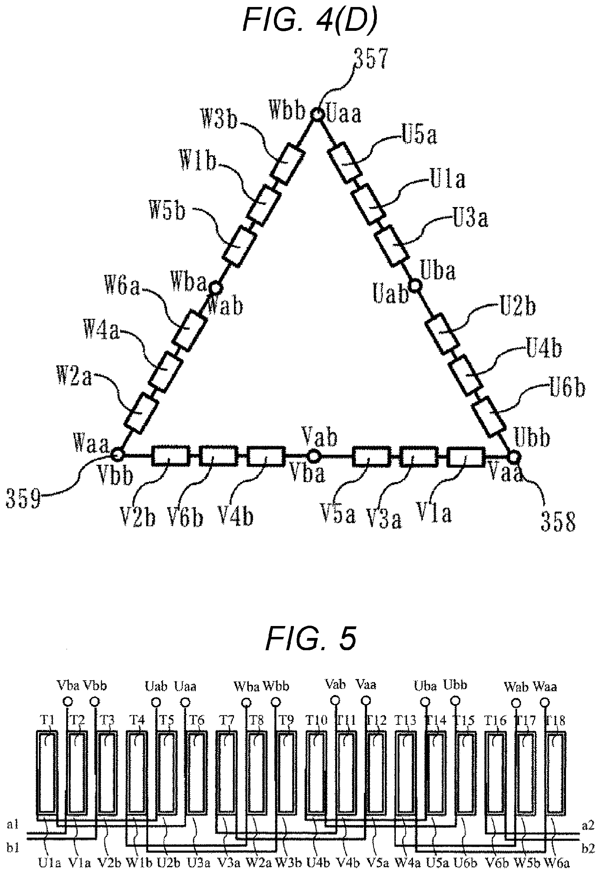

FIG. 4(D) illustrates an exemplary layout of coils in a series Δ-connection when the 3-series coils and the number of times of winding are used. The lead wire Uab of the Type-a 3-series coils U5a, U1a, and U3a is connected to the lead wire Uba of the Type-b 3-series coils U2b, U4b, and U6b, the lead wire Vab of the V1a, V3a, and V5a is connected to the lead wire Vba of the V4b, V6b, and V2b, and the lead wire Wab of the W2a, W4a, and W6a is connected to the lead wire Wba of the W5b, W1b, and W3b, so that a 6-series coil is configured. The lead wire Uaa of the Type-a 3-series coils U5a, U1a, and U3a and the lead wire Wbb of the W5b, W1b, and W3b are connected to a terminal 357, the lead wire Ubb of the U2b, U4b, and U6b and the lead wire Vaa of the V1a, V3a, and V5a are connected to a terminal 358, and the lead wire Vbb of the V4b, V6b, and V2b and the lead wire Waa of the W2a, W4a, and W6a are connected to a terminal 359, so that the connection layout of FIG. 4(D) is obtained. In FIG. 4(D), the terminal 357 is connected to the U-phase power source terminal, the terminal 358 is connected to the V-phase power source terminal, and the terminal 359 is connected to the W-phase power source terminal, so that the series Δ-connection can be configured.

The exemplary configurations of the Y-connection and the Δ-connection may be exactly equal even in the embodiments of the 3-series coils described below as long as the layout is configured in correspondence with the coil configuration order. Therefore, in the following embodiments, the description of the exemplary configurations of the Y-connection and the Δ-connection will be omitted.

### (Second Embodiment)

The configuration of the permanent magnet type brushless motor having 14 poles and 18 slots according to a second embodiment of the invention will be described using FIGS. 5 to 6(D).

In FIG. 5, U3a, U1a, and U2b are configured as 3-series coils, and similarly V5a, V3a, and V4b and W6a, W4a, and W5b are configured as 3-series coils, and these coils are considered as Type-a 3-series coils. In addition, U6b, U4b, and U5a are configured as 3-series coils, and similarly V2b, V6b, and V1a and W3b, W1b, and W2a are configured as 3-series coils, and these coils are considered as Type-b 3-series coils.

In the respective 3-series coils, the numbers of times of winding of the 3-series coils are sequentially set to the half integer Na, the integer N, and the half integer Nb. In this case, Group A: the number of times of winding of each of U1a, W1b, V3a, U4b, W4a, and V6b is the integer N, Group B: the number of times of winding of each of V1a, U2b, W2a, V4b, U5a, and W5b is the half integer Nb, and Group C: the number of times of winding of each of V2b, U3a, W3b, V5a, U6b, and W6a is the half integer Na. In each group, the number of times of winding is equal.

The description will be given using FIG. 5 about the connection of coils and the layout of a lead wire and a jumper wire in a case where the 3-series coils and the number of times of winding are configured as described above, and teeth T1 to T18 are arranged in this order and wound.

Herein, the lead wires of the coils are distinguished by attaching symbols using characters arranged one by one selected from the phases U, V, and W, the coil types a and b, and the forward/backward order (a, b) of the current direction. For example, the coil V5a connected to a lead wire Vaa has the number of times of winding of the half integer Na, and thus the jumper wire goes to the coil V3a on the opposite side to the lead wire Vaa. The coil V3a has the number of times of winding of the integer N, and thus the jumper wire goes to the coil V4b on the opposite side to the lead wire Vaa. The coil V4b has the number of times of winding of the half integer Nb, and thus a lead wire Vab is disposed on the same side as the lead wire Vaa.

In this way, with the 3-series coils and the number of times of winding, the lead wire and the jumper wires to a tooth far away from the adjacent tooth can be disposed on the opposite side.

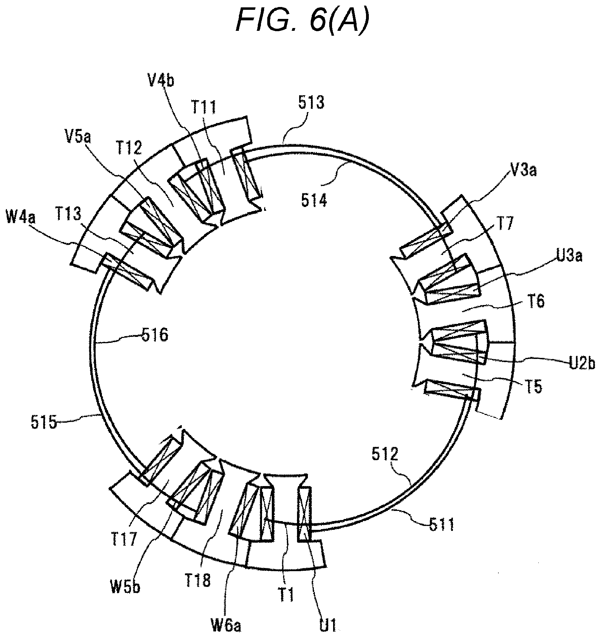

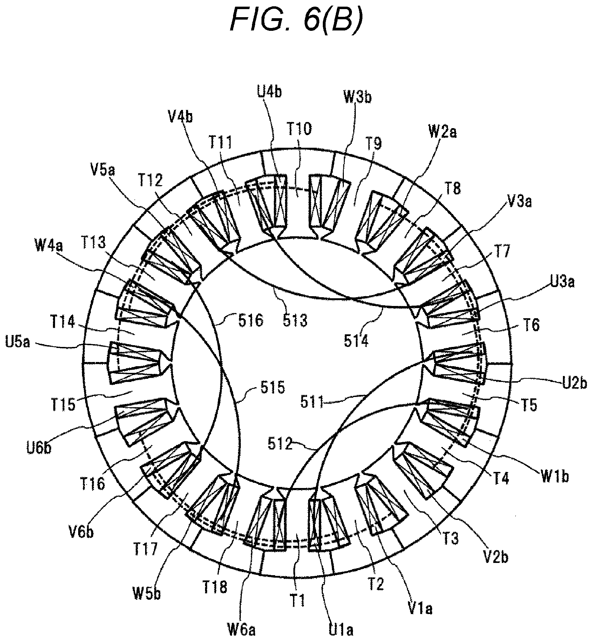

In the following, the description will be given using FIGS. 6(A) and 6(B) about an example of creating the 3-series coils by winding coils around the teeth of split stator cores and of assembling the coils to the stator.

FIGS. 6(A) and 6(B) are front views of the coil end when viewed from the jumper wire side (upper side) in an example where the lead wire side is placed below and the split cores are inserted and assembled, in which the layout of the inserted split core coils and the jumper wires is illustrated.

In the beginning, the Type-a 3-series coils are assembled in an order of U phase, V phase, and W phase. First, a split core containing the 3-series coils U3a, U1a, and U2b is disposed. Second, a split core containing the 3-series coils V5a, V3a, and V4b is disposed. Third, a split core containing the 3-series coils W6a, W4a, and W5b is disposed. In this case, as illustrated in FIG. 6 (A), the split core can be disposed without causing interference. FIG. 6 (A) illustrates the layout at this point of time.

Next, the description will be given using FIG. 6 (B) about an example of a procedure in which all the Type-a jumper wires 511 to 516 are deformed toward the inner diameter side, and the Type-b 3-series coils are assembled in an order of U phase, V phase, and W phase. Fourth, a split core containing the 3-series coils U6b, U4b, and U5a is disposed. Fifth, a split core containing the 3-series coils V2b, V6b, and V1a is disposed. Sixth, a split core containing the 3-series coils W3b, W1b, and W2a is disposed. In this case, similarly to the case of FIG. 6(A), all the split cores can be disposed without causing interference between the jumper wires of the 3-series coils and the split cores.

FIG. 6(B) illustrates the layout at this point of time. As described above, after all the split cores are disposed, six Type-a jumper wires which are deformed toward the inner diameter side are disposed at the ends of the coils, and the assembling of the stator coils is completed. In a second example, the number of jumper wires to be deformed and disposed at the ends of the coils is "6". With such a layout, on the lead wire side, a neutral point in Y-connection and a power source terminal may be connected, or the power source terminal in Δ-connection may be connected. Since no process is required for the jumper wire, additional members and complicate processing procedures are not necessary. Therefore, it is possible to improve work efficiency, and reduce manufacturing costs.

### (Third Embodiment)

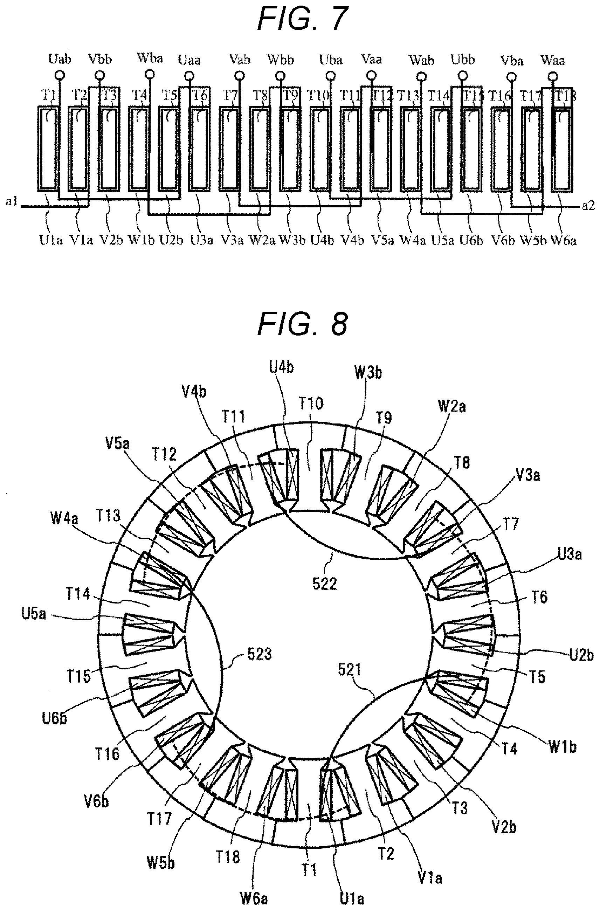

The description will be given using FIGS. 7 and 8 about a configuration of the permanent magnet type brushless motor having 14 poles and 18 slots according to a third embodiment of the invention.

In FIG. 7, U3a, U2b, U1a are configured as 3-series coils, and similarly V5a, V4b, and V3a and W6a, W5b, and W4a are configured as 3-series coils, and these coils are considered as Type-a 3-series coils. In addition, U6b, U5a, and U4b are configured as 3-series coils, and similarly V2b, V1a, and V6b and W3b, W2a, and W1b are configured as 3-series coils, and these coils are considered as Type-b 3-series coils.

In the respective 3-series coils, the numbers of times of winding of the 3-series coils are sequentially set to the integer N, the half integer Na, and the half integer Nb. In this case, Group A: the number of times of winding of each of U1a, W1b, V3a, U4b, W4a, and V6b is the half integer Nb, Group B: the number of times of winding of each of V1a, U2b, W2a, V4b, U5a, and W5b is the half integer Na, and Group C: the number of times of winding of each of V2b, U3a, W3b, V5a, U6b, and W6a is the integer N. In each group, the number of times of winding is equal.

The description will be given using FIG. 7 about the connection of coils and the layout of a lead wire and a jumper wire in a case where the 3-series coils and the number of times of winding are configured as described above, and teeth T1 to T18 are arranged in this order and wound. Herein, the lead wires of the coils are distinguished by attaching symbols using characters arranged one by one selected from the phases U, V, and W, the coil types a and b, and the forward/backward order (a, b) of the current direction.

For example, the coil V5a connected to the lead wire Vaa has the number of times of wiring of the integer N, and thus the jumper wire goes to the coil V4b on the same side as the lead wire Vaa. The coil V4b has the number of times of winding of the half integer Na, and thus the jumper wire goes to the coil V3a on the opposite side to the lead wire Vaa. The coil V3a has the number of times of winding of the half integer Nb, and thus the lead wire Vab is disposed on the same side as the lead wire Vaa. In this case, a winding direction of the coil V4b is set to a direction opposite to the coils V5a and V3a.

In this way, with the 3-series coils and the number of times of winding, the lead wire and the jumper wires to a tooth far away from the adjacent tooth can be disposed on the opposite side.

In the following, the description will be given using FIG. 8 about an example of creating the 3-series coils by winding coils around the teeth of split stator cores and of assembling the coils to the stator. FIG. 8 is a front view of the coil end when viewed from the jumper wire side (upper side) in an example where the lead wire side is placed below and the split cores are inserted and assembled, in which the layout of the inserted split core coils and the jumper wires is illustrated.

In the beginning, the Type-a 3-series coils are assembled in an order of U phase, V phase, and W phase similarly to the case of FIG. 6 (A). Since the jumper wires of the 3-series coils and the split cores can be disposed without causing interference, and the description thereof will be omitted.

Further, in the case of the jumper wire to the adjacent coil, no interference occurs because there is no teeth inserted therebetween. Therefore, there is no problem even when the jumper wire is disposed on the same side as the lead wire. In this example, the number of jumper wires disposed on the opposite side to the lead wire is "6".

Next, the description will be given using FIG. 8 about an exemplary procedure of deforming three Type-a jumper wires 521, 522, and 523 toward the inner diameter side, and assembling the Type-b 3-series coils in an order of U phase, V phase, and W phase. Fourth, a split core containing the 3-series coils U6b, U5a, and U4b is disposed. Fifth, a split core containing the 3-series coils V2b, V1a, and V6b is disposed. Sixth, a split core containing the 3-series coils W3b, W2a, and W1b is disposed. In this case, similarly to the case of FIG. 6 (A), all the split cores can be disposed without causing interference between the jumper wires of the 3-series coils and the split cores. FIG. 8 illustrates the layout at this point of time.

As described above, after all the split cores are disposed, three Type-a jumper wires which are deformed toward the inner diameter side are disposed at the ends of the coils, and the assembling of the stator coils is completed. In a third example, the number of jumper wires to be deformed and disposed at the ends of the coils is "3", so that the work efficiency is increased. In addition, since the length of the jumper wire is reduced almost to the half compared to the first and second examples, the coil resistance is improved.

With such a layout, on the lead wire side, a neutral point in Y-connection and a power source terminal may be connected, or the power source terminal in Δ-connection may be connected. Since no process is required for the jumper wire, additional members and complicate processing procedures are not necessary. Therefore, it is possible to improve work efficiency, and reduce manufacturing costs.

### (Fourth Embodiment)

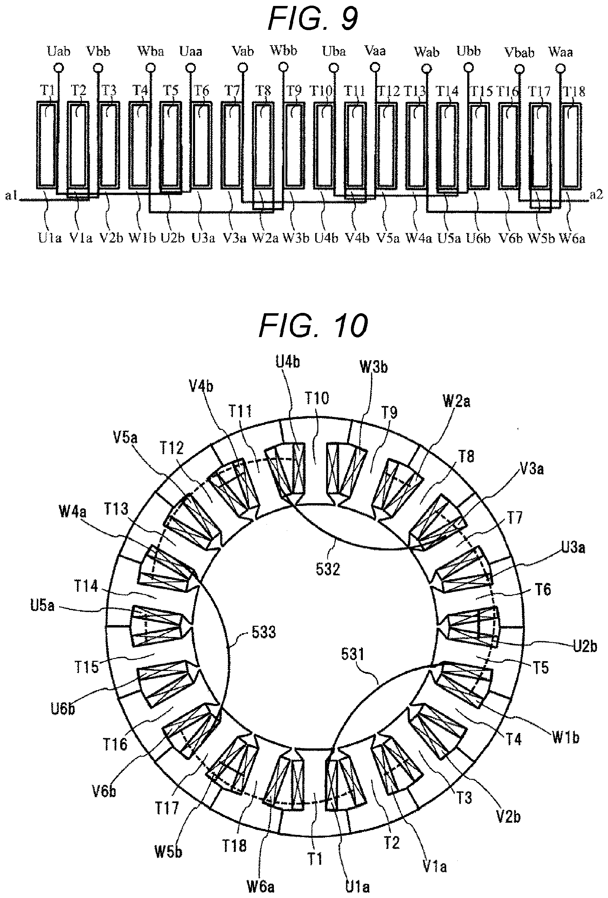

The description will be given using FIGS. 9 and 10 about a configuration of the permanent magnet type brushless motor having 14 poles and 18 slots according to a fourth embodiment of the invention.

In FIG. 1, U3a, U2b, and U1a are configured as 3-series coils, and similarly V5a, V4b, and V3a and W6a, W5b, and W4a are configured as 3-series coils, so that Type-a 3-series coils are configured. In addition, U6b, U5a, and U4b are configured as 3-series coils, and similarly V2b, V1a, and V6b and W3b, W2a, and W1b are configured as 3-series coils, and these coils are considered as Type-b 3-series coils. In the respective 3-series coils, the numbers of times of winding of the 3-series coils are sequentially set to a half integer Na, an integer N, and a half integer Nb. In this case, Group A: the number of times of winding of each of U1a, W1b, V3a, U4b, W4a, and V6b is the half integer Nb, Group B: the number of times of winding of each of V1a, U2b, W2a, V4b, U5a, and W5b is the integer N, Group C: the number of times of winding of each of V2b, U3a, W3b, V5a, U6b, and W6a is the half integer Na. In each group, the number of times of winding is equal.

The description will be given using FIG. 9 about the connection of coils and the layout of a lead wire and a jumper wire in a case where the 3-series coils and the number of times of winding are configured as described above, and teeth T1 to T18 are arranged in this order and wound. Herein, the lead wires of the coils are distinguished by attaching symbols using characters arranged one by one selected from the phases U, V, and W, the coil types a and b, and the forward/backward order (a, b) of the current direction.

For example, the coil V5a connected to the lead wire Vaa has the number of times of wiring of the half integer Na, and thus the jumper wire goes to the coil V4b on the opposite side to the lead wire Vaa. The coil V4b has the number of times of winding of the integer N, and thus the jumper wire goes to the coil V3a on the opposite side to the lead wire Vaa. The coil V3a has the number of times of winding of the half integer Nb, and thus the lead wire Vab is disposed on the same side as the lead wire Vaa. In this case, a winding direction of the coil V4b is set to a direction opposite to the coils V5a and V3a.

In this way, with the 3-series coils and the number of times of winding, the lead wire and the jumper wires to a tooth far away from the adjacent tooth can be disposed on the opposite side.

In the following, the description will be given using FIG. 10 about an example of creating the 3-series coils by winding coils around the teeth of split stator cores and of assembling the coils to the stator. FIG. 10 is a front view of the coil end when viewed from the jumper wire side (upper side) in an example where the lead wire side is placed below and the split cores are inserted and assembled, in which the layout of the inserted split core coils and the jumper wires is illustrated.

In the beginning, the Type-a 3-series coils are assembled in an order of U phase, V phase, and W phase similarly to the case of FIG. 6 (A). Since the jumper wires of the 3-series coils and the split cores can be disposed without causing interference, and the description thereof will be omitted.

Further, in the case of the jumper wire to the adjacent coil, no interference occurs because there is no teeth inserted therebetween. In the example, in the jumper wires disposed on the opposite side to the lead wire, the number of jumper wires to an adjacent coil is "6", and the number of jumper wires to the coil far away from the adjacent coil is "6".

Next, the description will be given using FIG. 10 about an exemplary procedure of deforming all three Type-a jumper wires 531, 532, and 533 toward the inner diameter side, and assembling the Type-b 3-series coils in an order of U phase, V phase, and W phase.

Fourth, a split core containing the 3-series coils U6b, U5a, and U4b is disposed. Fifth, a split core containing the 3-series coils V2b, V1a, and V6b is disposed. Sixth, a split core containing the 3-series coils W3b, W2a, and W1b is disposed. In this case, similarly to the case of FIG. 6 (A), all the split cores can be disposed without causing interference between the jumper wires of the 3-series coils and the split cores. FIG. 10 illustrates the layout at this point of time.

As described above, after all the split cores are disposed, three Type-a jumper wires 531, 532, and 533 which are deformed toward the inner diameter side are disposed at the ends of the coils, and the assembling of the stator coils is completed. In a fourth example, the number of jumper wires to be deformed and disposed at the ends of the coils is "3", so that the work efficiency is increased. In addition, since the length of the jumper wire is reduced almost to the half compared to the first and second examples, the coil resistance is improved.

With such a layout, on the lead wire side, a neutral point in Y-connection and a power source terminal may be connected, or the power source terminal in Δ-connection may be connected. Since no process is required for the jumper wire, additional members and complicate processing procedures are not necessary. Therefore, it is possible to improve work efficiency, and reduce manufacturing costs.

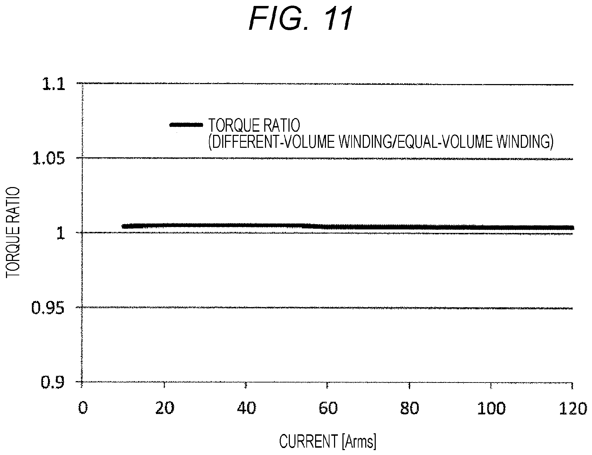

In the fourth embodiment of the invention, when the half integer Nb = 8.5, the integer N = 6, and a half integer Nba = 6.5 are set, the torque and the torque ripples of the permanent magnet type brushless motor having 14 poles and 18 slots are subjected to a computer simulation and compared to the torque and the torque ripples at the time of the half integer Nb = the integer N = the half integer Nba = 7. FIG. 11 illustrates a ratio of a torque value in a different-volume winding of the half integer Nb = 8.5, the integer N = 6, and the half integer Nba = 6.5 to that in an equal-volume winding, in which the horizontal axis represents a current value. The case of the different-volume winding shows that the torque value is increased by 0.4 to 0.5%. If an average number of times of winding is equal, the torque value shows a result of almost the same value.

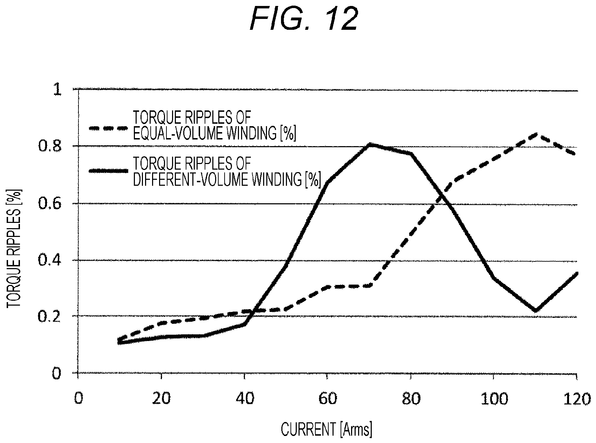

In addition, FIG. 12 is a graph illustrating the calculation values of the torque ripples of the different-volume winding and the equal-volume winding, in which the horizontal axis represents a current value. When the current is small, the torque ripples of the different-volume winding and the equal-volume winding are almost equal. Even when the current value is large, the difference value falls within 1% or less. In addition, maximum values of the calculated values of the torque ripples of the different-volume winding and the equal-volume winding are almost equal.

From the result, as implemented in the invention, even in a case where a motor has different numbers of times of winding in Group A, Group B, and Group C, the torque ripples of the motor becomes almost the same degree as the torque ripples of a motor of which the total number of times of winding is equal to an average number of times of winding of the above motor if the number of times of winding is equal in each group. In addition, it is considered that the torque of a motor of which the total number of times of winding is almost equal to the torque of an average number of times of winding. With this configuration, the invention is considered to achieve an effect of improving the manufacturing work efficiency without degrading the characteristics of the motor.

### Reference Signs List

- 100: stator
- 101: stator core
- 110: core back
- 120: fitting portion of split stator core
- T1 to T18: teeth
- U1a, V1a, V2b, W1b, U2b, U3a, V3a, W2a, W3b, U4b, V4b, V5a, W4a, U5a, U6b, V6b, W5b, W6a: stator coil
- 200: rotor
- 201: rotor core
- 210: permanent magnetic
- 301 to 303: neutral point
- 351 to 359: terminal
- 501 to 506: jumper wire
- 511 to 516: jumper wire
- 521 to 523: jumper wire
- 531 to 533: jumper wire

## Claims

1. A brushless motor comprising:
a concentrated winding stator; and
a permanent magnet type rotor,
wherein the number of teeth wound in series is 3 or more,
in a case where there is a coil adjacently connected to a coil of a tooth which is connected to a lead wire, a total number of times of winding of the teeth is set to the number of times of terminal winding,
in a case where there is no coil adjacently connected to the coil of the tooth which is connected to the lead wire, the number of times of winding of the coil of the tooth connected to the lead wire is set to the number of times of terminal winding,
the coil of the tooth connected to the lead wire or the adjacently connected coil is connected to a coil of a tooth far away from an adjacent tooth by a jumper wire, and the number of times of winding of a coil of a tooth which is connected to another lead wire or a coil of a tooth which is not the adjacently connected coil is set to the number of times of middle winding,
in a case where there is a coil adjacently connected to the coil of the tooth far away from the adjacent tooth which is connected to the jumper wire, the total number of times of winding of the teeth is set to the number of times of middle winding, and
when the number of times of middle winding is set to "0" in a case where there is no coil of the tooth far away from the adjacent tooth which is connected to the jumper wire, a stator coil is wound such that the number of times of terminal winding is a half integer and the number of times of middle winding is an integer.

2. The brushless motor according to claim 1, comprising a concentrated winding stator and a permanent magnet type rotor having 14 poles and 18 slots, 22 poles and 18 slots, or a combination of multiples of the poles and the slots,
wherein the number of times of winding of the coil of the tooth connected to the lead wire is set to a half integer,
the number of times of winding of the coil of the tooth connected to the other lead wire is set to a half integer,
the coil of the tooth connected to the lead wire is connected to a tooth far away from the adjacent tooth by the jumper wire, and
the stator coil is wound such that the number of times of winding of the coil of the tooth connected to the other lead wire and the number of times of winding of the coil of the tooth connected to the tooth far away from the adjacent tooth by the jumper wire become integers.

3. The brushless motor according to claim 1, comprising a concentrated winding stator and a permanent magnet type rotor having 14 poles and 18 slots, 22 poles and 18 slots, or a combination of multiples of the poles and the slots,
wherein a total number of times of winding of the coil of the tooth connected to the lead wire and the coil adjacently connected to the tooth is set to a half integer,
the coil adjacently connected to the coil of the tooth connected to the lead wire is connected to a tooth far away from the adjacent tooth by the jumper wire, and
the stator coil is wound such that the number of winding of the coil of the tooth connected to the other lead wire becomes a half integer.

4. The brushless motor according to any one of claims 1 to 3,
wherein the brushless motor is used in an automotive auxiliary machine of an electric power steering or an electric brake.
